# EUROPÄISCHE PATENTSCHRIFT

(11) **EP 1 666 179 B1**
(45) Veröffentlichungstag und Bekanntmachung des Hinweises auf die Patenterteilung: **24.01.2018**
(21) Anmeldenummer: 05026165.0
(22) Anmeldetag: 01.12.2005
(51) Int. Cl.: B23B 29/06, B23B 27/04, B23B 27/08, B23B 29/04, B23Q 17/22

(54) **Schneidplatte zum Ein- oder Abstechen von Werkstücken**
Cutting insert for grooving and cutting-off of work pieces
Plaquette de coupe pour le décolletage et tronçonnage des pièces

(30) Priorität: 01.12.2004 DE 202004018570 U; 29.11.2005 DE 202005018739 U
(43) Veröffentlichungstag der Anmeldung: 07.06.2006
(73) Patentinhaber: Präzisions-Drehteile Löcher GmbH, 73463 Westhausen (DE)
(72) Erfinder: Löcher, Anton, 73463 Westhausen (DE)
(74) Vertreter: Schmid, Wolfgang

(56) Entgegenhaltungen:
- WO-A-2004/062839
- US-A- 5 836 723
- US-B1- 6 244 790

## Beschreibung

Die Erfindung betrifft eine Schneidplatte zum Ein- oder Abstechen von Werkstücken nach der im Oberbegriff von Anspruch 1 näher definierten Art.

Eine gattungsgemäße Schneidplatte ist aus der US 6,244,790 B1 bekannt. Dabei ist auf der der Schneide gegenüberliegenden Seite eine Fase vorgesehen, die rein herstellungsbedingte Gründe hat.

Weitere derartige Schneidplatten zum Ein- oder Abstechen sind aus der WO 2004/062839 A1, der US 5,836,723 A, der EP 0 497 257 B1, der DE 39 10 805 C2 oder der DE 38 19 415 C2 bekannt.

Ein prinzipielles Problem dieser bekannten, zum Ein- oder Abstechen verwendeten Schneidplatten ist, dass sie, je stumpfer sie werden, um so mehr um eine in Ein- bzw. Abstechrichtung verlaufende Achse kippen, was jedoch zu einer höheren Schnittkraft und einer schlechteren Oberfläche führt. Selbstverständlich ist von diesem Verhalten der Schneidplatte auch die Maßhaltigkeit des bearbeiteten Werkstücks betroffen.

Ein weiterer Nachteil der bekannten Schneidplatten besteht außerdem darin, dass sie durch ihren verhältnismäßig schlechten Sitz innerhalb der Ausnehmung des Schneidplattenhalters bereits bei der Bewegung des Schneidplattenhalters von seiner Ruhe- in seine Arbeitsposition aus dem Schneidplattenhalter fallen können.

Die zur Aufnahme der Schneidplatte dienende Aufnahmeausnehmung dieser Bearbeitungswerkzeuge ist meist konisch ausgeführt, wodurch bei einer sich während der Lebensdauer des Grundkörpers ergebenden Abnutzung der Aufnahmeausnehmung die Schneidplatte immer weiter in dieselbe eindringt. Hierdurch kann keine feste Position für die Schneidplatte sichergestellt werden, wodurch bei jedem Schneidplattenwechsel eine neue Einstellung des gesamten Bearbeitungswerkzeugs erforderlich ist. Zudem ist es auch möglich, dass sich ein und dieselbe Schneidplatte während der Bearbeitung verstellt, was zu einer Verringerung der Maßhaltigkeit bereits während der Bearbeitung führt.

Des Weiteren sind Montagevorrichtungen zum Einbringen einer solchen Schneidplatte in die Aufnahmeausnehmung des Grundkörpers bekannt, welche jedoch relativ schwer zu bedienen und damit fehlerbehaftet sind.

Es ist daher Aufgabe der vorliegenden Erfindung, eine Schneidplatte zum Ein- oder Abstechen von Werkstücken zu schaffen, welche so ausgebildet ist, dass sie einen besseren Halt in einer Ausnehmung eines Schneidplattenhalters besitzt.

Diese Aufgabe wird durch die in Anspruch 1 genannten Merkmale gelöst.

Durch die erfindungsgemäße, sich abwechselnde Erhebungen und Vertiefungen aufweisenden Verzahnung wird eine formschlüssige Verbindung zwischen der erfindungsgemäßen Schneidplatte und der Ausnehmung des zugehörigen Schneidplattenhalters geschaffen, wodurch eine sehr stabile Halterung der erfindungsgemäßen Schneidplatte in dem Schneidplattenhalter möglich ist. Durch dieses Stabilisieren der Schneidplatte in dem Schneidplattenhalter wird vorteilhafterweise auch dann ein Verkippen der Schneidplatte verhindert, wenn die Schneide derselben stumpf wird.

Die erfindungsgemäße Schneidplatte tendiert während des Einsatzes mit zunehmender Stumpfheit eher zum Brechen als zum Kippen, so dass für einen Benutzer derselben eindeutig klar wird, wann die Platte nicht mehr brauchbar ist. Dadurch, dass dieses Kippen der Schneidplatte verhindert wird, ist eine höhere Maßhaltigkeit und eine bessere Oberflächenqualität der mit der erfindungsgemäßen Schneidplatte hergestellten Werkstücke möglich.

Durch die erfindungsgemäße Verzahnung ergibt sich des weiteren eine erhebliche Erhöhung der Berührungsfläche zwischen der Schneidplatte und dem Schneidplattenhalter, wodurch ein noch festerer Sitz der Schneidplatte gegeben ist und diese erheblich höhere Schnittkräfte als bekannte Schneidplatte aufnehmen kann.

Des Weiteren ist vorgesehen, dass der Abschnitt auf der der Schneide gegenüberliegenden Seite mit einer Abschrägung versehen ist. Durch eine solche Abschrägung wird einem eventuellen Kippen der erfindungsgemäßen Schneidplatte bei hohen Schnittkräften vorgebeugt.

In einer vorteilhaften Weiterbildung der Erfindung kann vorgesehen sein, dass der Rand des mit der Ausnehmung in Kontakt stehenden Abschnitts der Schneidplatte drei Randabschnitte aufweist, wobei der erste Randabschnitt gegenüberliegend zu der Schneide angeordnet ist, wobei der zweite Randabschnitt an einer Oberseite des Abschnitts angeordnet ist, wobei der dritte Randabschnitt auf einer Unterseite des Abschnitts angeordnet ist, und wobei sich die Verzahnung an dem oberen Randabschnitt und dem unteren Randabschnitt befindet. Durch die einander gegenüberliegenden Verzahnungen ergibt sich ein erheblich verbesserter Halt der Schneidplatte in dem Schneidplattenhalter, wodurch von der Schneidplatte noch höhere Schnittkräfte aufgenommen werden können.

Eine besonders einfache Montage der erfindungsgemäßen Schneidplatte innerhalb der Ausnehmung des Schneidplattenhalters ist gegeben, wenn die Erhebungen und Vertiefungen der Verzahnungen in Einschieberichtung der Schneidplatte in die Ausnehmung verlaufen.

Um eine besonders einfache Herstellbarkeit der erfindungsgemäßen Verzahnung zu erreichen, kann in einer weiteren vorteilhaften Ausgestaltung der Erfindung vorgesehen sein, dass die Erhebungen und Vertiefungen der Verzahnung abgerundet sind, um ein wellenförmiges Verzahnungsprofil zu bilden.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: eine Seitenansicht eines Schneidplattenhalters mit einer darin aufgenommenen, erfindungsgemäßen Schneidplatte;
- Fig. 2: eine Seitenansicht der erfindungsgemäßen Schneidplatte in einer vergrößerten Darstellung;
- Fig. 3: einen Schnitt nach der Linie III-III aus Fig. 2 mit einem Teil des Schneidplattenhalters;
- Fig. 4: eine Vorderansicht der Schneidplatte gemäß dem Pfeil IV aus Fig. 2;
- Fig. 5: eine Draufsicht auf die Schneidplatte gemäß dem Pfeil V aus Fig. 2;
- Fig. 6: eine Draufsicht auf ein nicht zu der Erfindung gehörendes Bearbeitungswerkzeug;
- Fig. 7: eine nicht zur Erfindung gehörende Vorrichtung im montierten Zustand; und
- Fig. 8: die Vorrichtung aus Fig. 7 im demontierten Zustand.

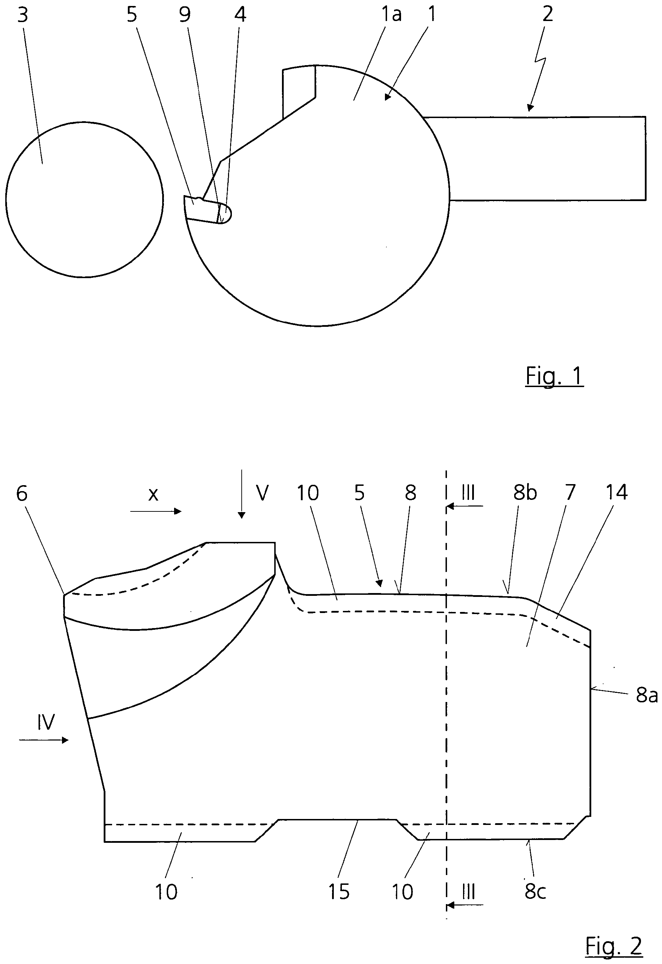

Fig. 1 zeigt einen Schneidplattenhalter 1, der Teil einer Vorrichtung 2 zum Ein- oder Abstechen eines rotierenden Werkstückes 3 ist und eine sich in einer sogenannten Klingenscheibe la des Schneidplattenhalters 1 befindliche Ausnehmung 4 aufweist, in der eine Schneidplatte 5 angeordnet ist. Der prinzipielle Aufbau des Schneidplattenhalters 1 kann demjenigen entsprechen, der in der EP 0 497 257 B1 beschrieben ist. Aus diesem Grund wird hierin nicht näher darauf eingegangen. Die Vorrichtung 2 zum Ein- oder Abstechen des Werkstücks 3 wird häufig auch als Ein- oder Abstechwerkstück bezeichnet.

In Fig. 2 ist die Schneidplatte 5 in einer vergrößerten Seitenansicht dargestellt. Dabei ist erkennbar, dass die Schneidplatte 5 eine Schneide 6 aufweist, die bei der Bearbeitung des Werkstücks 3 mit demselben in Kontakt steht. Des weiteren weist die Schneidplatte 5 einen von der Schneide 6 abgewandten Abschnitt 7 auf, der innerhalb der Ausnehmung 4 des Schneidplattenhalters 1 angeordnet ist. Der Rand 8 des Abschnitts 7 steht also mit dem Rand 9 der Ausnehmung 4 in Kontakt. Dabei weist der Rand 8 des der Schneide 6 abgewandten Abschnitts 7 drei Randabschnitte 8a, 8b und 8c auf, von denen der erste Randabschnitt 8a gegenüberliegend zu der Schneide 6 angeordnet ist und damit als hinterer Randabschnitt 8a bezeichnet werden kann. Der zweite Randabschnitt 8b ist an einer Oberseite des Abschnitts 7 angeordnet und wird daher im folgenden als oberer Randabschnitt 8b bezeichnet, wohingegen der dritte Randabschnitt 8c an einer Unterseite des Abschnitts 7 angeordnet ist und daher als unterer Randabschnitt 8c bezeichnet wird.

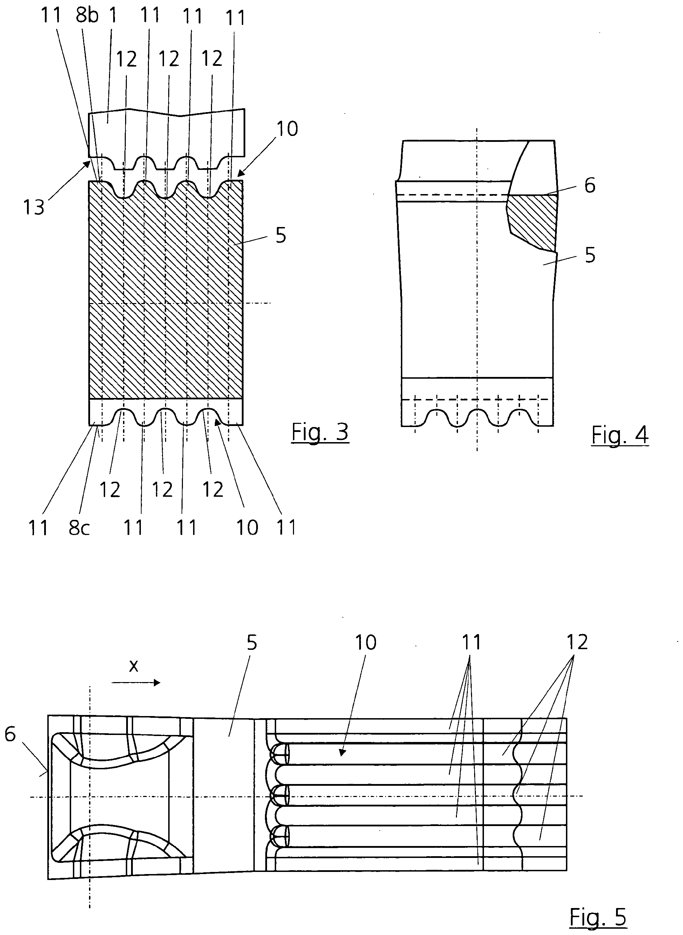

Wie in dem Schnitt gemäß Fig. 3 erkennbar ist, weisen sowohl der obere Randabschnitt 8b als auch der untere Randabschnitt 8c jeweilige Verzahnungen 10 auf, die aus sich abwechselnden Erhebungen 11 und Vertiefungen 12 bestehen. Allgemein ist der mit dem Rand 9 der Ausnehmung 4 in Kontakt stehende Abschnitt 7 der Schneidplatte 5 zumindest über einen Teil seines Randes 8 mit wenigstens einer Verzahnung 10 versehen. Dabei ist die Längserstreckung der sich abwechselnden Erhebungen 11 und Vertiefungen 12 derart, dass diese in der mit "X" bezeichneten Einschieberichtung der Schneidplatte 5 in die Ausnehmung 4 des Schneidplattenhalters 1 verlaufen. Dies ist in der Draufsicht gemäß Fig. 5 besonders gut zu erkennen. Durch die Verzahnungen 10 ist die Schneidplatte 5 erheblich besser innerhalb des Schneidplattenhalters 1, der, wie wiederum in Fig. 3 erkennbar ist, mit ähnlichen Verzahnungen 13 versehen ist geführt und stabiler gehalten. In der Vorderansicht gemäß Fig. 4 ist lediglich die Verzahnung 10 des unteren Randabschnitts 8c zu erkennen.

Durch die verbesserte Halterung der Schneidplatte 5 in der Ausnehmung 4 des Schneidplattenhalters 1 wird ein Verkippen der Schneidplatte 5 verhindert, was bei der Bearbeitung des Werkstücks 3 zu einer höheren Maßhaltigkeit und einer besseren Oberflächenqualität führt.

Des weiteren kann die Schneidplatte 5 auf diese Weise erheblich höhere Schnittkräfte als üblich aufnehmen.

Im vorliegenden Fall sind die Erhebungen 11 und die Vertiefungen 12 der Verzahnungen 10 jeweils abgerundet und bilden somit ein wellenförmiges Profil der Verzahnungen 10. Gleiches gilt auch für die Verzahnungen 13 des Schneidplattenhalters 1, wobei hier die Erhebungen 11 abgeflacht sind. Selbstverständlich wären auch andere Profile bzw. Querschnitte der Verzahnungen 10 und 13 denkbar, wobei die abgerundete Form jedoch besonders einfach hergestellt werden kann.

Wie wiederum in Fig. 2 erkennbar ist, ist der Abschnitt 7 der Schneidplatte 5 auf der der Schneide 6 gegenüberliegenden Seite mit einer Abschrägung 14 versehen, die sich zwischen dem hinteren Randabschnitt 8a und dem oberen Randabschnitt 8b befindet. Die Abschrägung 14, über welche ebenfalls die Verzahnung 10 verläuft, gibt der Schneidplatte 5 eine zusätzliche Stabilität innerhalb der Ausnehmung 4 des Schneidplattenhalters 1.

Eine weitere Erhöhung der Stabilität wird durch eine Aussparung 15 erreicht, die sich in dem unteren Randabschnitt 8c befindet und somit die Verzahnung 10 in diesem Bereich in zwei Abschnitte teilt. Diese Aussparung 15 stellt sicher, dass die Schneidplatte an ihrem unteren Randabschnitt 8c an zwei Flächen gegenüber dem Schneidplattenhalter 1 aufliegt, und verhindert so ein Kippen der Schneidplatte 5 innerhalb der Ausnehmung 4 des Schneidplattenhalters 1.

Die Ausnehmung 4 des Schneidplattenhalters 1 ist im vorliegenden Fall im wesentlichen U-förmig ausgebildet, da diese Form jedoch von der Form der Schneidplatte 5 abhängt, kann sie sich analog zu einer Änderung der Form der Schneidplatte 5 ebenfalls ändern. Die Anzahl der Erhebungen 11 und Vertiefungen 12 der Verzahnungen 10 und 13 hängt insbesondere von der Breite der Schneidplatte 5 ab und kann daher von der dargestellten Anzahl unterschiedlich sein.

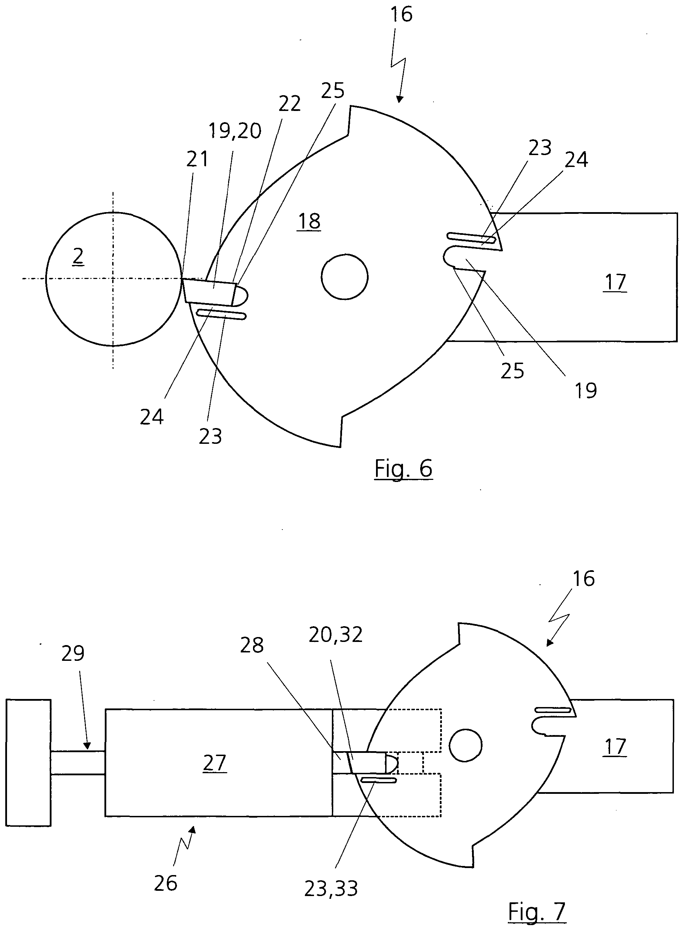

Fig. 6 zeigt ein Bearbeitungswerkzeug 16 zum Bearbeiten des Werkstücks 2. Im vorliegenden Fall ist das Bearbeitungswerkzeug 16 wiederum als Einstechwerkzeug und das Werkstück 2 wiederum als Drehteil ausgebildet, es wäre jedoch auch möglich, das Bearbeitungswerkzeug 16 als Kreissäge oder als Scheibenfräser auszuführen. In diesem Fall könnte das Werkstück 2 selbstverständlich beliebig ausgeführt sein.

Das Bearbeitungswerkzeug 16 weist einen Halter 17 und einen an dem Halter 17 angebrachten Grundkörper 18 auf, der im vorliegenden Fall mit zwei identischen Aufnahmeausnehmungen 19 versehen ist, die zur Aufnahme einer Schneidplatte 20 dienen. Da ein Ein- bzw. Abstechwerkzeug bei der Bearbeitung nicht rotiert, befindet sich lediglich in einer der Aufnahmeausnehmungen 19 eine Schneidplatte 20. Insofern könnte gegebenenfalls auch auf eine der Aufnahmeausnehmungen 19 verzichtet werden. Wenn das Bearbeitungswerkzeug 16 als Kreissäge oder als Scheibenfräser ausgebildet ist, befinden sich an seinem Umfang selbstverständlich mehrere Aufnahmeausnehmungen 19 mit darin angeordneten Schneidplatten 20.

Der Punkt, an dem bei der bestimmungsgemäßen Verwendung des Bearbeitungswerkzeugs 16 die höchste Schnittkraft auftritt, nämlich die Hauptschneide der Schneidplatte 20, ist mit dem Bezugszeichen 21 markiert. Während der Bearbeitung tendiert die Schneidplatte 20 an dem mit dem Bezugszeichen 22 bezeichneten anderen Ende der Oberseite der Schneidplatte 20 dazu, eine Kraft auf den Grundkörper 18 auszuüben. Der Grundkörper 18 weist auf der der Hauptschneide 21 gegenüberliegenden Seite der Aufnahmeausnehmung 22, also auf der Unterseite derselben, eine von der Aufnahmeausnehmung 19 beabstandete, gegenüber dem Umfang des Grundkörpers 18 geschlossene Ausnehmung 23 auf. Gleichzeitig ist die lichte Weite der Aufnahmeausnehmung 19 geringfügig kleiner als die Höhe der Schneidplatte 20, und zwar um einen Betrag von ca. 0,02 bis 0,1 mm, vorzugsweise um 0,04 bis 0,06 mm, wodurch beim Einbringen der Schneidplatte 20 in die Aufnahmeausnehmung 19 diese mit einer gewissen Vorspannung gehalten wird. Hierbei verlaufen die Oberkante und die Unterkante der Aufnahmeausnehmung 19 im wesentlichen parallel zueinander.

Durch die geschlossene Ausnehmung 23 ergibt sich an der Unterseite der Aufnahmeausnehmung 19 ein Steg 24, der beim Einführen der Schneidplatte 20 in die Aufnahmeausnehmung 19 elastisch nachgibt und dadurch die Schneidplatte 20 mit Vorspannung und einer hohen Kraft in der Aufnahmeausnehmung 19 hält. Im vorliegenden Fall weist die geschlossene Ausnehmung 23 die Form eines Langlochs auf, welches im wesentlichen parallel zu der benachbarten Seitenkante bzw. der Unterseite der Aufnahmeausnehmung 19 verläuft. Gegebenenfalls wären auch andere Formen der Ausnehmung 23 möglich.

Um die Schneidplatte 20 nicht nur mit einer gleichmäßigen Kraft elastisch innerhalb der Aufnahmeausnehmung 19 des Grundkörpers 18 zu halten, sondern auch die axiale Position der Schneidplatte 20 zu sichern, weist die Aufnahmeausnehmung 19 einen Anschlag 25 für die Schneidplatte 20 auf. Der Anschlag 25 ist im vorliegenden Fall als in die Aufnahmeausnehmung 19 ragender Vorsprung des Grundkörpers 18 ausgebildet. Gegebenenfalls wäre es jedoch auch möglich, die Aufnahmeausnehmung 19 nur so tief auszuführen, wie es für einen sicheren Sitz der Schneidplatte 20 notwendig ist, sodass der Anschlag 25 durch das Ende der Aufnahmeausnehmung 19 gebildet wird. Bei der dargestellten Ausführungsform ist die Aufnahmeausnehmung 19 lediglich aus fertigungstechnischen Gründen länger als dies zur Aufnahme der Schneidplatte 20 notwendig wäre.

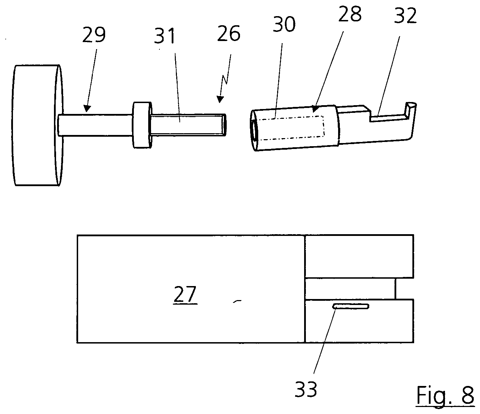

Die Figuren 7 und 8 zeigen eine Vorrichtung 26 zur Montage der Schneidplatte 20 in der Aufnahmeausnehmung 19 des Grundkörpers 18 des in Fig. 1 dargestellten Bearbeitungswerkzeugs 16. Die Vorrichtung 26 weist einen Grundkörper 27, in dem ein Montagebolzen 28 verschieblich gelagert ist, sowie eine Betätigungseinrichtung 29 für den Montagebolzen 28 auf. Wie aus Fig. 8 hervorgeht, weist der Montagebolzen 28 ein Innengewinde 30 auf, in welches ein Außengewinde 31 der im vorliegenden Fall als Stellschraube ausgebildeten Betätigungseinrichtung 29 eingreift. Dadurch ergibt sich beim Drehen der Betätigungseinrichtung 29 eine Verschiebung des Montagebolzens 28 in Längsrichtung desselben. Um für ein Einschieben der Schneidplatte 20 in die Aufnahmeausnehmung 19 eine Drehung der Betätigungseinrichtung 29 im Uhrzeigersinn zu erreichen, sind das Innengewinde 30 und das Außengewinde 31 jeweils als Linksgewinde ausgebildet.

Zum Einbringen der Schneidplatte 20 in die Aufnahmeausnehmung 19 des Grundkörpers 18 wird dieselbe in eine Aussparung 32 des Montagebolzens 28 eingelegt und ein an dem Grundkörper 27 der Vorrichtung 26 angebrachter Vorsprung 33 wird in die Ausnehmung 23 des Grundkörpers 18 des Bearbeitungswerkzeugs 16 eingebracht. Durch Drehen der Betätigungseinrichtung 29 wird anschließend der Montagebolzen 28 in die Aufnahmeausnehmung 19 eingefahren, bis der Montagebolzen 28 am Ende der Aufnahmeausnehmung 19 anschlägt. Dabei wird die Aufnahmeausnehmung 19 elastisch aufgeweitet. Anschließend kann der Grundkörper 18 und damit die gesamte Vorrichtung 26 von dem Bearbeitungswerkzeug 16 entfernt werden. Die Demontage der Schneidplatte 20 aus der Aufnahmeausnehmung 19 erfolgt durch Drehen der Betätigungseinrichtung 29 in umgekehrter Richtung.

Durch die Verbindung des Grundkörpers 27 der Vorrichtung 26 mit dem Grundkörper 18 des Bearbeitungswerkzeugs 16 über den in die Ausnehmung 23 eingreifenden Vorsprung 33 ist eine äußerst gleichmäßige Montage der Schneidplatte 20 in der Aufnahmeausnehmung 19 gewährleistet. Hierzu sollte der Vorsprung 33 möglichst exakt maßhaltig mit der Ausnehmung 23 ausgebildet sein.

Um die Kraft, mit der die Schneidplatte 20 in der Aufnahmeausnehmung 19 befestigt wird, möglichst gleichmäßig zu halten, kann die Betätigungseinrichtung 29 mit einer nicht dargestellten Einrichtung zum Verbinden derselben mit einer Einrichtung zum Einstellen eines Drehmoments, wie zum Beispiel eins Drehmomentschlüssels, ausgebildet sein. Diese Einrichtung kann beispielsweise ein Innensechskant sein, in den der Drehmomentschlüssel eingreift. Gegebenenfalls wäre es auch möglich, die Betätigungseinrichtung 29 mit einer Einrichtung zu versehen, aus der das jeweilige Drehmoment hervorgeht, und/oder eine Skala an der Betätigungseinrichtung 29 anzubringen, an der das eingestellte Drehmoment ablesbar ist. Durch diese Maßnahmen dient die Vorrichtung 26 nicht nur zur Montage der Schneidplatte 20 in der Aufnahmeausnehmung 19 des Grundkörpers 18, sondern auch zu einer exakten Einstellung der Position der Schneidplatte 20.

## Patentansprüche

1. Schneidplatte (5) zum Ein- oder Abstechen von Werkstücken (2), welche zur Unterbringung in einem Schneidplattenhalter (1) vorgesehen ist, mit wenigstens einer Schneide (6) und mit einem von der Schneide (6) abgewandten Abschnitt (7), dessen Rand (8) bei der Unterbringung der Schneidplatte (5) in dem Schneidplattenhalter (1) mit dem Rand (9) einer Ausnehmung (4) des Schneidplattenhalters (1) in Kontakt steht, wobei der mit dem Rand (9) der Ausnehmung (4) des Schneidplattenhalters (1) in Kontakt stehende Abschnitt (7) der Schneidplatte (5) wenigstens eine, zumindest über einen Teil seines Randes (8) verlaufende, sich abwechselnde Erhebungen (11) und Vertiefungen (12) aufweisende Verzahnung (10) aufweist, und wobei der Abschnitt (7) auf der der Schneide (6) gegenüberliegenden Seite zwischen einem hinteren Randabschnitt (8a) und einem oberen Randabschnitt (8b) mit einer Abschrägung (14) versehen ist,
**dadurch gekennzeichnet, dass**
die sich abwechselnde Erhebungen (11) und Vertiefungen (12) aufweisende Verzahnung (10) auch über die Abschrägung (14) verläuft.

2. Schneidplatte nach Anspruch 1,
**dadurch gekennzeichnet, dass**
der Rand (8) des mit der Ausnehmung (4) in Kontakt stehenden Abschnitts (7) der Schneidplatte (5) drei Randabschnitte (8a,8b,8c) aufweist, wobei der erste Randabschnitt (8a) gegenüberliegend zu der Schneide (6) angeordnet ist, wobei der zweite Randabschnitt (8b) an einer Oberseite des Abschnitts (7) angeordnet ist, wobei der dritte Randabschnitt (8c) auf einer Unterseite des Abschnitts (7) angeordnet ist, und wobei sich an dem oberen Randabschnitt (8b) und dem unteren Randabschnitt (8c) jeweils eine Verzahnung (10) befindet.

3. Schneidplatte nach Anspruch 1 oder 2,
**dadurch gekennzeichnet, dass**
die Erhebungen (11) und Vertiefungen (12) der wenigstens einen Verzahnung (10) in Einschieberichtung (X) der Schneidplatte (5) in die Ausnehmung (4) verlaufen.

4. Schneidplatte nach einem der Ansprüche 1 bis 3,
**dadurch gekennzeichnet, dass**
die Erhebungen (11) und Vertiefungen (12) der wenigstens einen Verzahnung (10) abgerundet sind, um ein wellenförmiges Verzahnungsprofil zu bilden.

5. Schneidplatte nach einem der Ansprüche 1 bis 4,
**dadurch gekennzeichnet, dass**
die wenigstens eine Verzahnung (10) in einem der Randabschnitte (8a,8b,8c) eine Aussparung (15) aufweist.

6. Schneidplatte nach den Ansprüchen 2 und 5,
**d**a**durch gekennzeichnet,** dass
sich die Aussparung (15) in dem unteren Randabschnitt (8c) befindet.

## Claims

1. Cutting insert (5) for grooving or cutting off workpieces (2), which is provided to be accommodated in a cutting insert holder (1), having at least one cutter (6) and having a section (7) which faces away from the cutter (6) and the edge (8) of which is in contact with the edge (9) of a recess (4) in the cutting insert holder (1) when the cutting insert (5) is accommodated in the cutting insert holder (1), the section (7) of the cutting insert (5) that is in contact with the edge (9) of the recess (4) in the cutting insert holder (1) having at least one toothing system (10) having alternating elevations (11) and depressions (12) extending over at least part of its edge (8), and, on the side opposite the cutter (6), the section (7) being provided with a chamfer (14) between a rear edge section (8a) and an upper edge section (8b),
**characterized in that**
the toothing system (10) having alternating elevations (11) and depressions (12) also extends over the chamfer (14).

2. Cutting insert according to Claim 1,
**characterized in that**
the edge (8) of that section (7) of the cutting insert (5) which is in contact with the recess (4) has three edge sections (8a, 8b, 8c), wherein the first edge section (8a) is arranged opposite the cutter (6), wherein the second edge section (8b) is arranged on an upper side of the section (7), wherein the third edge section (8c) is arranged on an underside of the section (7) and wherein there is a toothing system (10) in each case on the upper edge section (8b) and the lower edge section (8c).

3. Cutting insert according to Claim 1 or 2,
**characterized in that**
the elevations (11) and depressions (12) of the at least one toothing system (10) extend into the recess (4) in the insertion direction (X) of the cutting insert (5).

4. Cutting insert according to one of Claims 1 to 3,
**characterized in that**
the elevations (11) and depressions (12) of the at least one toothing system (10) are rounded in order to form a wave-like toothing profile.

5. Cutting insert according to one of Claims 1 to 4,
**characterized in that**
the at least one toothing system (10) has a cut-out (15) in one of the edge sections (8a, 8b, 8c).

6. Cutting insert according to Claims 2 and 5,
**characterized in that**
the cut-out (15) is located in the lower edge section (8c).

## Revendications

1. Plaquette de coupe (5) pour entailler ou couper des pièces d'outillage (2), qui est prévue pour être positionnée dans un support de plaquette de coupe (1), avec au moins un tranchant (6) et avec un segment (7) décalé par rapport au tranchant (6), dont le bord (8), lors de la mise en place de la plaquette de coupe (5) dans le support de plaquette de coupe (1), est en contact avec le bord (9) d'un évidement (4) du support de plaquette de coupe (1), dans laquelle le bord (9) d'un évidement (4) du support de plaquette de coupe (1) qui est en contact avec ledit segment (7) de la plaquette de coupe (5), présente au moins sur une partie de son bord (8) de façon continue et alternative des rehaussements (11) et des abaissements (12) présentant des dentures (10), et dans lequel le segment (7) du côté opposé au tranchant (6), agencé entre une section arrière (8a) du bord et une section supérieure (8b) du bord, est pourvue d'un biseau (14),
**caractérisée en ce que**,
les rehaussements (11) échangeables et les abaissements (12) présentant des dentures (10) s'étendent également par-dessus le biseau (14).

2. Plaquette de coupe selon la revendication 1,
**caractérisée en ce que**,
le bord (8) du segment (7) de la plaquette de coupe (5) en contact avec de l'évidement (4), comporte trois coupures de bord (8a, 8b, 8c), dans lequel la première coupure de bord (8a) est disposée en face du tranchant (6), dans lequel la deuxième coupure de bord (8b) est disposée contre une face supérieure du segment (7), dans lequel la troisième coupure de bord (8c) est disposée sur un bord inférieur du segment (7), et dans lequel, respectivement une denture (10) se situe contre la coupure inférieure de bord (8b) et contre la coupure inférieure de bord (8c).

3. Plaquette de coupe selon les revendications 1 ou 2,
**caractérisée en ce que**,
les rehaussements (11) et les abaissements (12) d'au moins une denture (10) sont engagés dans l'évidement (4) dans la direction d'engagement (X) de la plaquette de coupe (5).

4. Plaquette de coupe selon l'une des revendications 1 à 3,
**caractérisée en ce que**,
les rehaussements (11) et les abaissements (12) d'au moins une denture (10) sont arrondis afin de former un profil de dentures en forme de vagues.

5. Plaquette de coupe selon l'une des revendications 1 à 4,
**caractérisée en ce que**,
au moins une denture (10) comporte un évidement (15) dans une des coupure du bord (8a, 8b, 8c).

6. Plaquette de coupe selon les revendications 2 et 5,
**caractérisée en ce que**,
l'évidement (15) se situe dans la coupure de bord inférieure (8c).
